# EUROPEAN PATENT SPECIFICATION

(11) **EP 2 464 790 B1**
(45) Date of publication and mention of the grant of the patent: **16.11.2016**
(21) Application number: 10740418.8
(22) Date of filing: 30.07.2010
(51) Int. Cl.: E02B 8/02

(54) **SCREENING DEVICE AND METHOD FOR PURIFYING WATER**
SIEBVORRICHTUNG UND VERFAHREN ZUR WASSERREINIGUNG
DISPOSITIF DE TAMISAGE ET PROCÉDÉ POUR PURIFIER DE L'EAU

(30) Priority: 11.08.2009 NL 2003345
(43) Date of publication of application: 20.06.2012
(73) Proprietor: Manshanden, Gerardus Augustinus Maria, 1671 LA Medemblik (NL)
(72) Inventor: MANSHANDEN, Gerardus Augustinus Maria, NL-1671 LA Medemblik (NL)
(74) Representative: Algemeen Octrooi- en Merkenbureau B.V.
(86) International application number: PCT/NL2010/050488
(87) International publication number: WO 2011/019274

(56) References cited:
- WO-A1-98/15336
- US-A- 1 420 508
- US-A- 1 810 981

## Description

The present invention relates to a screening device for purifying water in accordance with the preamble of claim 1 and a method for purifying water in accordance with the preamble of claim 14. Such a device and method are described in WO 98/15336.

Screening devices for purifying water are generally known, they are for example employed in the purification of water that is used as cooling water for power plants. In the known screening devices, dirt as well as fish and jellyfish are screened from the water. Research has shown that a large number of fish and jellyfish do not survive the screening device. The reason for this is, for example, that fish and jellyfish are crushed to death on the screen, or that (in particular) small fish and jellyfish nevertheless get through the screen. Said fish and jellyfish then find their way into the cooling water system, which a large part of the fish and jellyfish do not survive on account of being damaged. In absolute numbers, tens of thousands of fish and jellyfish per day may be involved in an average power plant.

It is an object of the invention to obviate the above drawbacks. It is in particular an object of the invention to propose a screening device for purifying water which reduces the number of fish that are killed in the screening device and/or which provides an efficient and/or adequate purification of the water before the water enters the cooling water circuit.

In order to accomplish that object, a screening device in accordance with claim 1 and a method in accordance with claim 14 is provided. The screening device for purifying water according to the invention comprises a holder provided with a bottom, side walls, an end wall provided with an inlet opening and an end wall provided with an outlet opening, a drum screen extending horizontally between said apertures in the end walls, which has a cylindrical wall provided with apertures for the passage of water and an inlet opening and an outlet opening, which screening device further comprises an outlet in the walls or the bottom of the holder for the discharge of purified water, wherein the drum screen comprises a rotatable, helical flange which extends axially from the inlet opening of the drum screen, along at least part of the length thereof, and which abuts against the drum screen. Rotation of the helical flange causes the water to be sucked into the drum screen and to be driven from the inlet opening of the drum screen to the outlet opening of the drum screen. At least part of the water can flow through the apertures in the cylindrical wall, whereupon it is discharged, whilst dirt, fish and jellyfish that may be present in the water cannot pass through the apertures and are discharged via the outlet opening of the drum screen. The risk of fish and jellyfish being damaged in the screening device is thus reduced, so that the number of fish and jellyfish that are killed and/or damaged is reduced and/or the water is efficiently and/or adequately purified.

In a preferred embodiment of the screening device according to the invention, the flange extends along the entire length of the drum screen. This has the advantage that the moving of dirt, fish and jellyfish to the outlet opening can take place in an efficient manner, so that dirt, fish and jellyfish will not accumulate in the drum screen. This reduces the risk of the apertures in the cylindrical wall clogging up, so that the need for costly and/or time-consuming operations involving the cleaning of the cylindrical wall is eliminated or at least reduced.

In another preferred embodiment of the screening device according to the invention, the flange is rigidly connected to the wall of the drum screen. The advantage of this is that the drum screen can rotate along with the flange, so that fish and jellyfish cannot get jammed between the cylindrical wall of the drum screen and the flange. Thus the risk of fish and jellyfish being damaged is further reduced.

In another preferred embodiment of the screening device according to the invention, at least one end part of the drum screen comprises a portion having a length corresponding to at least one pitch length of the flange where the cylindrical wall does not have any apertures for the passage of water. Preferably, both end parts of the drum screen comprise a portion having a length corresponding to at least one pitch length of the flange where the cylindrical wall does not have any apertures for the passage of water. Such portions where the cylindrical wall does not have any apertures contribute to an efficient and/or adequate suction force of the flange. As a result, more water can be sucked into the drum screen at an unchanged rotational speed, or the rotational speed of the flange can be reduced whilst the suction force remains the same.

In another preferred embodiment of the screening device according to the invention, the helical flange tapers off into a point at at least one end thereof. Preferably, the helical flange tapers off into a point at least at the end near the inlet opening. More preferably, said point terminates in the cylindrical wall of the drum screen. Said tapered configuration of the flange has the advantage that less sound is produced and that the risk of fish and jellyfish being damaged upon being drawn into the drum screen is further reduced.

In another preferred embodiment of the screening device according to the invention, the holder is open on the side opposite the bottom. The advantage of this is that in a situation where less purified water is discharged from the holder than is admitted through the apertures in the cylindrical wall, the excess water can exit the drum screen via the side located opposite the bottom.

In another preferred embodiment of the screening device according to the invention, the screening device is provided with floating bodies, such that the screening device remains afloat in water. An advantage of a screening device provided with floating bodies is that the screening device will thus remain at a constant level relative to the water surface, so that the screening device will continue to function properly when the water level rises and/or falls.

In another preferred embodiment of the screening device according to the invention, the screening device is provided with nozzles designed to spray water on the upper side of the apertured cylindrical wall. An advantage of nozzles that spray water on the upper side of the apertured cylindrical wall is that the apertures can be cleaned out easily in case of possible clogging thereof.

In another preferred embodiment of the screening device according to the invention, the screening device is provided with a pump which is connected to the outlet.

In another preferred embodiment of the screening device according to the invention, the holder is provided with storage means for storing the purified water. An advantage of the use of storage means is that a pump cannot run dry on account of the presence of the storage means.

The invention also relates to a method for purifying water according to claim 14.

In the method, water is introduced into the inlet opening of a drum screen on one side, wherein screened water is discharged from the outer side of the cylindrical wall of the drum screen and residual water is discharged from the outlet opening of the drum screen on the other side, wherein a helical flange which extends in axial direction along at least part of the length of the drum screen and which abuts against the drum screen is rotated, in such a manner that that objects present in the water, for example fish and jellyfish, are driven to the outlet opening. An advantage of such a method is the fact that the water is efficiently and/or adequately purified and/or that the risk of fish and jellyfish being damaged is reduced.

The invention will now be described in more detail with reference to figures illustrated in a drawing, in which:
- Figure 1 is a perspective view of a screening device according to a preferred embodiment of the invention; and
- Figure 2 is a front view of the screening device of figure 1 in use.

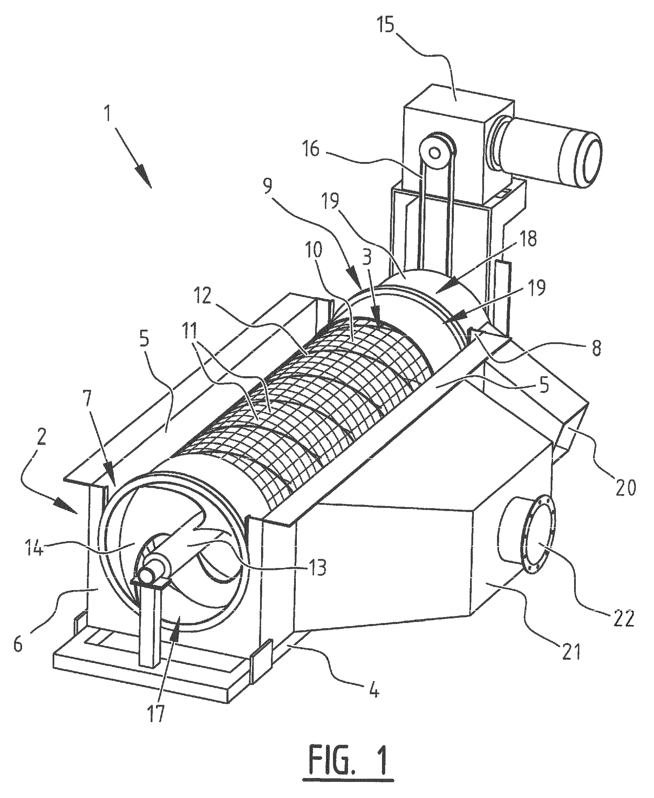

Figure 1 shows a screening device 1 for purifying water. The screening device 1 comprises a holder 2 for a drum screen 3. The holder 2 comprises a bottom 4, side walls 5, a first end wall 6 provided with an inlet opening 7, and a second end wall 8 provided with an outlet opening 9.

The drum screen 3 extends lengthwise between the openings 7,9 of the end walls 6,8. The drum screen 3 has a cylindrical wall 10, in which apertures 11 are provided along at least part of the length of the cylindrical wall 10. The apertures 11 are not drawn to scale in the figures, but preferably they are small, such that water can pass through the apertures 11, whilst objects present in the water cannot pass therethrough. Mounted in the drum screen 3 is an Archimedean screw 12 provided with a shaft 13 and three helical flanges 14 that extend axially along the length of the drum screen 3, which flanges 14 abut against the cylindrical wall 10 of the drum screen 3. The flanges 14 are preferably rigidly connected to the cylindrical wall 10 of the drum screen 3. The screening device 1 further comprises a motor 15 provided with a movable belt 16, which is passed over the shaft 13 of the screw 12. Movement of the belt 16 results in the screw 12 being rotatably driven, causing the drum screen 3 to rotate along therewith in case of a rigid connection between the drum screen 3 and the flanges 14. It is also possible to use a direct drive mechanism.

Rotation of the screw 12 causes water to be sucked into the drum screen 3 through an inlet opening 17 of the drum screen 3. To obtain a good suction force, no apertures 11 are provided in the cylindrical wall over a length corresponding to at least one pitch length of the flange from the inlet opening 17. This can also be achieved by arranging a jacket around the flange. The water is present in the drum screen 3 between the flanges 14 and, upon rotation of the screw 12, will be driven in a direction away from the inlet opening 17 to an outlet opening 18 located on the other side of the drum screen 3. Near the outlet opening 18, the cylindrical wall 10 likewise does not have apertures 11 over a length corresponding to at least one pitch length of the flange. As a result, the water is sucked from the drum screen 3 via the outlet opening 18 in an efficient manner. While the water is being driven from the inlet opening 17 to the outlet opening 18, the water can flow through apertures 11 in the cylindrical wall 10 of the drum screen 3. Any dirt, fish and jellyfish present in the water cannot pass through the apertures 11, so that the water is cleared of said dirt, fish and jellyfish. The dirt, the fish and the jellyfish are driven to the outlet opening 18 of the drum screen 3. Said moving ahead of dirt, fish and jellyfish to the outlet opening 18 takes place in an efficient manner because the flanges 14 extend along the length of the drum screen 3, i.e. from the inlet opening 17 to the outlet opening 18. Since the dirt, the fish and the jellyfish are moved ahead in an efficient manner, they will not accumulate in the drum screen 3, so that the apertures 11 of the cylindrical wall 10 will hardly clog up, if at all. Disposed near the outlet opening 18 is a projecting piece of cylindrical wall 19, which is not provided with apertures. Provided in said piece of cylindrical wall 19 is an outlet 20, through which the dirt, the fish and the jellyfish are discharged. At least part of the water that is passed through the apertures 11 of the cylindrical wall 10 flows into a storage space 21 in a side wall 5 of the holder 2. Said storage space 21 has a second outlet 22 provided with a flange for discharging the purified water. A pump, for example, can be connected to said second outlet provided with the flange, making it possible to pump the purified water from the storage space 21.

As figure 1 shows, the flanges 14 taper off into a point near the inlet opening 17, which point terminates in the circumference of the cylindrical wall 10 of the drum screen 3. This enables the screw 12 to move smoothly through the water, so that the sound level is kept within bounds. It also saves fish and jellyfish, which are driven to the outlet opening 18 of the drum screen 3, remaining alive, so that they can swim off unharmed after being discharged through the outlet 20. To that end the flanges 14 likewise preferably taper off into a point near the outlet opening 18.

As furthermore appears from figure 1, the holder 2 of the screening device 1 is open on a side opposite the bottom 4.

Through said open side, excess water can be discharged in a situation in which the amount of water being pumped off is smaller than the purified amount of water. The device may be provided with nozzles (not shown) which spray water on the open upper side, such that a part of the cylindrical wall 10 of the drum screen 3 present on said open side is being sprayed. Since the cylindrical wall 10 rotates, successive parts of the cylindrical wall 10 will be sprayed as the wall rotates.

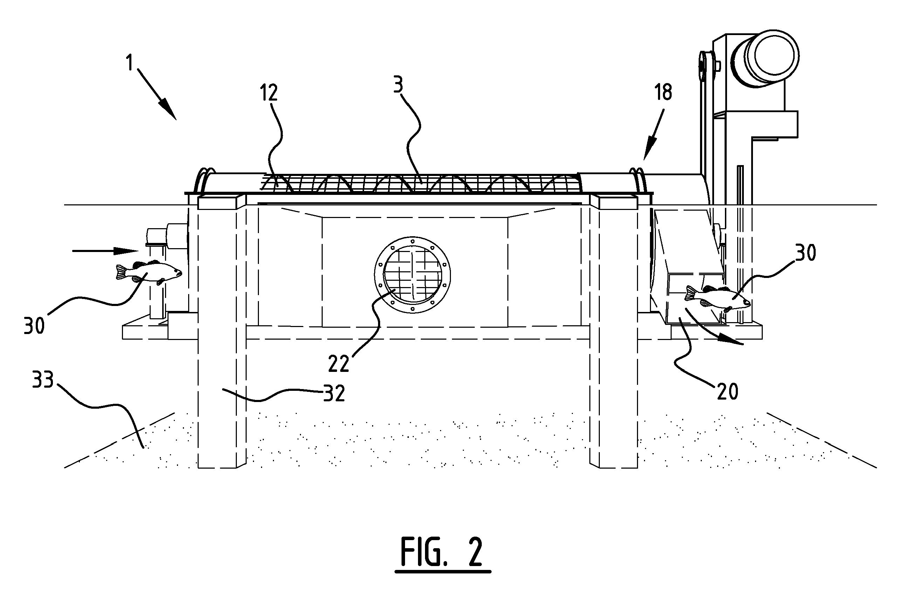

In figure 2 the screening device 9 is shown in use. A fish 30 which is pumped into the drum screen 3 by the suction force of the screw 12 will not be damaged on account of the configuration of the flanges 14. As a result, the fish 30 will be safely driven to the outlet opening 18, whereupon the fish 30 will be discharged back into the water via the outlet 20. The purified water can be discharged by a pump (not shown), which can be connected to the second outlet provided with the flange 22. Figure 2 furthermore shows that the screening device 1 is provided with legs 32, such that the screening device 1 can stand on the bottom 33 of the water. The screening device 1 may also be provided with floating bodies (not shown) instead of with legs 32, which has the advantage that the screening device will be constantly disposed at the same level relative to the water surface, even if the water level rises or falls.

It is noted that the invention is not limited to the embodiment as described above, but that it also extends to other variants that fall within the scope of the appended claims. Thus it will be understood that instead of using the flanges 14 that extend along the length of the drum screen 3 it is also possible to use shorter flanges 14, for example having a length corresponding to at least one pitch length of the flange, in which case the flanges 14 extend from the inlet opening 17. An advantage of using shorter flanges is that less material is required. Furthermore, two sets of shorter flanges 14 may be used, with a first set of flanges extending from the inlet opening 17 and a second set of flanges extending from the outlet opening 18. An advantage of using two sets of flanges is that this leads to a better discharge of dirt from the drum screen 3 than in the situation in which a single set of flanges is used.

## Claims

1. A screening device (1) for purifying water, said screening device (1) being disposed in water, comprising a holder (2) provided with a bottom (4), side walls (5), a first end wall (6) provided with an inlet opening (7) and a second end wall (8) provided with an outlet opening (9), a drum screen (3) extending between said openings (7, 9) in the end walls (6, 8) of the holder (2) , which drum screen (3) has a cylindrical wall (10) provided with apertures (11) for the passage of water and an inlet opening (17) and an outlet opening (18), which screening device (1) further comprises an outlet (22) in one of the side walls (5) or the bottom (4) of the holder (2) for the discharge of purified water, wherein the drum screen (3) further comprises a rotatable, helical flange (14) which extends axially from the inlet opening (17) of the drum screen (3), along at least part of the length thereof, and which abuts against the drum screen (3), **characterized in that** said screening device (1) is disposed in said water such that said drum screen (3) extends horizontally between said openings (7, 9) in the end walls (6, 8) of the holder (2) , in such a manner that objects present in the water, for example fish (30) and jellyfish, are driven alive to the outlet opening (9) in the second end wall (8) of the holder (2) and will not accumulate in the drum screen (3).

2. A screening device (1) according to claim 1, wherein the flange (14) extends along the entire length of the drum screen (3).

3. A screening device (1) according to claim 1 or 2, wherein the flange (14) is rigidly connected to the wall (10) of the drum screen (3).

4. A screening device (1) according to claim 1, 2 or 3, wherein at least one end part of the drum screen (3) comprises a portion having a length corresponding to at least one pitch length of the flange (14) where the cylindrical wall (10) does not have any apertures (11) for the passage of water.

5. A screening device (1) according to any one of the preceding claims, wherein both end parts of the drum screen (3) comprise a portion having a length corresponding to at least one pitch length of the flange (14) where the cylindrical wall (10) does not have any apertures (11) for the passage of water.

6. A screening device (1) according to any one of the preceding claims, wherein the helical flange (14) tapers off into a point at at least one end thereof.

7. A screening device (1) according to claim 6, wherein said point terminates in the cylindrical wall (10) of the drum screen (3).

8. A screening device (1) according to any one of the preceding claims, wherein the holder (2) is open on the side opposite the bottom (4).

9. A screening device (1) according to any one of the preceding claims, wherein the screening device (1) is provided with floating bodies, such that the screening device (1) remains afloat in water.

10. A screening device (1) according to any one of the preceding claims, wherein the screening device (1) is provided with nozzles designed to spray water on the upper side of the apertured cylindrical wall (10).

11. A screening device (1) according to any one of the preceding claims, wherein the screening device (1) comprises a motor for rotatably driving the flange (14).

12. A screening device (1) according to any one of the preceding claims, wherein the screening device (1) is provided with a pump which is connected to the outlet.

13. A screening device (1) according to any one of the preceding claims, wherein the holder (2) is provided with storage means for storing the purified water.

14. A method for purifying water, wherein water is introduced into the inlet opening (17) of a drum screen (3) on one side, wherein screened water is discharged from the outer side of the cylindrical wall (10) of the drum screen (3) and residual water is discharged from the outlet opening (18) of the drum screen (3) on the other side, and wherein a helical flange (14) which extends in axial direction along at least part of the length of the drum screen (3) and which abuts against the drum screen (3) is rotated, **characterized in that** said drum screen (3) extends horizontally between said inlet opening (17) and said outlet opening (18) in such a manner that objects present in the water, for example fish and jellyfish, are driven alive to the outlet opening (18) and will not accumulate in the drum screen (3).

## Patentansprüche

1. Siebvorrichtung (1) zur Wasserreinigung, wobei die Siebvorrichtung (1) im Wasser vorgesehen ist, mit einer Halterung (2), die mit einem Boden (4), Seitenwänden (5), einer mit einer Zuflussöffnung (7) versehenen ersten Stirnwand (6) und einer mit einer Abflussöffnung (9) versehenen zweiten Stirnwand (8) versehen ist, einem sich zwischen den Öffnungen (7, 9) in den Stirnwänden (6, 8) der Halterung (2) erstreckendes Trommelsieb (3), wobei das Trommelsieb (3) eine mit Öffnungen (11) für den Durchfluss von Wasser versehene, zylindrische Wand (10) sowie eine Zuflussöffnung (17) und eine Abflussöffnung (18) hat, wobei die Siebvorrichtung (1) ferner einen Abfluss (22) in einer der Seitenwände (5) oder dem Boden (4) der Halterung (2) zum Ableiten von gereinigtem Wasser umfasst, wobei das Trommelsieb (3) ferner einen drehbaren, spiralförmigen Flansch (14) umfasst, der sich axial von der Zuflussöffnung (17) des Trommelsiebs (3), entlang wenigstens eines Teils der Länge des Trommelsiebs erstreckt, und der am Trommelsieb (3) angrenzt, **dadurch gekennzeichnet, dass** die Siebvorrichtung (1) derart im Wasser vorgesehen ist, dass das Trommelsieb (3) sich horizontal zwischen den Öffnungen (7, 9) in den Stirnwänden (6, 8) der Halterung (2) erstreckt, in einer Weise dass im Wasser vorhandene Objekte, beispielsweise Fische (30) und Quallen, lebendig zur Abflussöffnung (9) in der zweiten Stirnwand (8) der Halterung (2) getrieben werden und sich nicht im Trommelsieb (3) ansammeln.

2. Siebvorrichtung (1) nach Anspruch 1, wobei sich der Flansch (14) entlang der gesamten Länge des Trommelsiebs (3) erstreckt.

3. Siebvorrichtung (1) nach Anspruch 1 oder 2, wobei der Flansch (14) starr mit der Wand (10) des Trommelsiebs (3) verbunden ist.

4. Siebvorrichtung (1) nach Anspruch 1, 2 oder 3, wobei wenigstens ein Endteil des Trommelsiebs (3) einen Abschnitt mit einer Länge aufweist, die wenigstens einer Ganghöhe des Flanschs (14) entspricht, wobei die zylindrische Wand (10) in dem Abschnitt keine Öffnungen (11) für den Durchfluss von Wasser hat.

5. Siebvorrichtung (1) nach einem der vorhergehenden Ansprüche, wobei beide Endteile des Trommelsiebs (3) einen Abschnitt mit einer Länge aufweisen, die wenigstens einer Ganghöhe des Flanschs (14) entspricht, wobei die zylindrische Wand (10) in dem Abschnitt keine Öffnungen (11) für den Durchfluss von Wasser hat.

6. Siebvorrichtung (1) nach einem der vorhergehenden Ansprüche, wobei der spiralförmige Flansch (14) sich an wenigstens einem seiner Enden zu einer Spitze verjüngt.

7. Siebvorrichtung (1) nach Anspruch 6, wobei die Spitze in der zylindrischen Wand (10) des Trommelsiebs (3) endet.

8. Siebvorrichtung (1) nach einem der vorhergehenden Ansprüche, wobei die Halterung (2) an der zum Boden (4) entgegengesetzten Seite offen ist.

9. Siebvorrichtung (1) nach einem der vorhergehenden Ansprüche, wobei die Siebvorrichtung (1) mit Schwimmkörpern versehen ist, sodass die Siebvorrichtung (1) auf Wasser schwimmt.

10. Siebvorrichtung (1) nach einem der vorhergehenden Ansprüche, wobei die Siebvorrichtung (1) mit Düsen versehen ist, die dazu vorgesehen sind, Wasser auf die Oberseite der offenen zylindrischen Wand (10) zu spritzen.

11. Siebvorrichtung (1) nach einem der vorhergehenden Ansprüche, wobei die Siebvorrichtung (1) einen Motor umfasst, um den Flansch (14) drehend anzutreiben.

12. Siebvorrichtung (1) nach einem der vorhergehenden Ansprüche, wobei die Siebvorrichtung (1) mit einer mit dem Abfluss verbundenen Pumpe versehen ist.

13. Siebvorrichtung (1) nach einem der vorhergehenden Ansprüche, wobei die Halterung (2) mit Speichereinrichtungen zum Speichern des gereinigten Wassers versehen ist.

14. Verfahren zur Wasserreinigung, wobei Wasser in die Zuflussöffnung (17) eines Trommelsiebs (3) auf einer Seite eingeleitet wird, wobei filtriertes Wasser von der Außenseite der zylindrischen Wand (10) des Trommelsiebs (3) abgeleitet wird, und verbleibendes Wasser durch die Abflussöffnung (18) des Trommelsiebs (3) auf der anderen Seite abgeleitet wird, und wobei ein spiralförmiger Flansch (14) gedreht wird, der sich in axialer Richtung entlang wenigstens eines Teils der Länge des Trommelsiebs (3) erstreckt und der am Trommelsieb (3) angrenzt, **dadurch gekennzeichnet, dass** sich das Trommelsieb (3) derart horizontal zwischen der Zuflussöffnung (17) und der Abflussöffnung (18) erstreckt, dass im Wasser vorhandene Objekte, beispielsweise Fische und Quallen, lebendig zur Abflussöffnung (18) getrieben werden und sich nicht im Trommelsieb (3) ansammeln.

## Revendications

1. Dispositif de criblage (1) pour purifier l'eau, ledit dispositif de criblage (1) étant disposé dans l'eau, comprenant un support (2) muni d'une partie inférieure (4), de parois latérales (5), d'une première paroi d'extrémité (6) munie d'une ouverture d'entrée (7) et d'une deuxième paroi d'extrémité (8) munie d'une ouverture de sortie (9), un tamis rotatif (3) s'étendant entre lesdites ouvertures (7, 9) dans les parois d'extrémité (6, 8) du support (2), lequel tamis rotatif (3) a une paroi cylindrique (10) munie d'orifices (11) pour le passage de l'eau et une ouverture d'entrée (17) et une ouverture de sortie (18), lequel dispositif de criblage (1) comprend en outre une sortie (22) dans l'une des parois latérales (5) ou la partie inférieure (4) du support (2) pour l'évacuation de l'eau purifiée, où le tamis rotatif (3) comprend en outre une bride hélicoïdale rotative (14) qui s'étend axialement depuis l'ouverture d'entrée (17) du tamis rotatif (3), le long d'au moins une partie de sa longueur, et qui vient en butée contre le tamis rotatif (3), **caractérisé en ce que** ledit dispositif de criblage (1) est disposé dans ladite eau de sorte que ledit tamis rotatif (3) s'étende horizontalement entre lesdites ouvertures (7, 9) dans les parois d'extrémité (6, 8) du support (2), de telle manière que des objets présents dans l'eau, par exemple des poissons (30) et des méduses, soient entraînés en vie vers l'ouverture de sortie (9) dans la deuxième paroi d'extrémité (8) du support (2) et ne s'accumuleront pas dans le tamis rotatif (3).

2. Dispositif de criblage (1) selon la revendication 1, dans lequel la bride (14) s'étend sur toute la longueur du tamis rotatif (3).

3. Dispositif de criblage (1) selon la revendication 1 ou 2, dans lequel la bride (14) est reliée de manière rigide à la paroi (10) du tamis rotatif (3).

4. Dispositif de criblage (1) selon la revendication 1, 2 ou 3, dans lequel au moins une partie d'extrémité du tamis rotatif (3) comprend une portion ayant une longueur correspondant à au moins une longueur de pas de la bride (14) où la paroi cylindrique (10) n'a pas d'orifices (11) pour le passage de l'eau.

5. Dispositif de criblage (1) selon l'une quelconque des revendications précédentes, dans lequel les deux parties d'extrémité du tamis rotatif (3) comprennent une portion ayant une longueur correspondant à au moins une longueur de pas de la bride (14) où la paroi cylindrique (10) n'a pas d'orifices (11) pour le passage de l'eau.

6. Dispositif de criblage (1) selon l'une quelconque des revendications précédentes, dans lequel la bride hélicoïdale (14) se rétrécit en un point situé au niveau d'au moins une de ses extrémités.

7. Dispositif de criblage (1) selon la revendication 6, dans lequel ledit point se termine dans la paroi cylindrique (10) du tamis rotatif (3).

8. Dispositif de criblage (1) selon l'une quelconque des revendications précédentes, dans lequel le support (2) est ouvert sur le côté opposé à la partie inférieure (4).

9. Dispositif de criblage (1) selon l'une quelconque des revendications précédentes, dans lequel le dispositif de criblage (1) est muni de corps flottants, de sorte que le dispositif de criblage (1) reste à flot dans l'eau.

10. Dispositif de criblage (1) selon l'une quelconque des revendications précédentes, dans lequel le dispositif de criblage (1) est muni de buses conçues pour pulvériser l'eau sur le côté supérieur de la paroi cylindrique ajourée (10).

11. Dispositif de criblage (1) selon l'une quelconque des revendications précédentes, dans lequel le dispositif de criblage (1) comprend un moteur pour entraîner en rotation la bride (14).

12. Dispositif de criblage (1) selon l'une quelconque des revendications précédentes, dans lequel le dispositif de criblage (1) est muni d'une pompe qui est reliée à la sortie.

13. Dispositif de criblage (1) selon l'une quelconque des revendications précédentes, dans lequel le support (2) est muni de moyens de stockage pour stocker l'eau purifiée.

14. Procédé pour purifier l'eau, dans lequel l'eau est introduite dans l'ouverture d'entrée (17) d'un tamis rotatif (3) sur un côté, dans lequel l'eau criblée est évacuée depuis le côté extérieur de la paroi cylindrique (10) du tamis rotatif (3) et l'eau résiduelle est évacuée depuis l'ouverture de sortie (18) du tamis rotatif (3) sur l'autre côté, et dans lequel une bride hélicoïdale (14) qui s'étend dans une direction axiale le long d'au moins une partie de la longueur du tamis rotatif (3) et qui vient en butée contre le tamis rotatif (3) est mise en rotation, **caractérisé en ce que** ledit tamis rotatif (3) s'étend horizontalement entre ladite ouverture d'entrée (17) et ladite ouverture de sortie (18) de telle manière que des objets présents dans l'eau, par exemple des poissons et des méduses, soient entraînés en vie vers l'ouverture de sortie (18) et ne s'accumuleront pas dans le tamis rotatif (3).
